# EUROPÄISCHE PATENTSCHRIFT

(11) **EP 0 461 716 B1**
(45) Veröffentlichungstag und Bekanntmachung des Hinweises auf die Patenterteilung: **22.03.1995**
(21) Anmeldenummer: 91201405.7
(22) Anmeldetag: 06.06.1991
(51) Int. Cl.: A01F 25/20

(54) **Teleskopischer Tragarm**
Telescopic supporting arm
Bras de support télescopique

(30) Priorität: 13.06.1990 NL 9001336
(43) Veröffentlichungstag der Anmeldung: 18.12.1991
(73) Patentinhaber: LITECH B.V., NL-7521 PD Enschede (NL)
(72) Erfinder: Liet, Cornelis Hendricus, NL-7581 PJ Losser (NL); Liet, Fredericus, NL-7581 HD Losser (NL)
(74) Vertreter: de Vries, Johannes Hendrik Fokke

(56) Entgegenhaltungen:
- FR-A- 2 501 130

## Beschreibung

Die Erfindung bezieht sich auf einen teleskopischen Tragarm, insbesondere für eine Silofutterschneidvorrichtung mit einem Ladebehälter, mit zwei langgestreckten, torsionsfesten Profilen, wovon ein Innenprofil in einem Außenprofil verschiebbar ist, wobei am einen Ende des Innenprofils ein Träger, insbesondere für eine Schneideinheit, befestigt ist.

Mit einem solchen teleskopischen Tragarm ausgebildete Silofutterschneidvorrichtungen sind in verschiedenen Ausführungen bekannt siehe z.B. FR-A-2 501 130. Dieser teleskopische Tragarm muß verschiedene Anforderungen erfüllen. Erstens muß der Tragarm gut torsionsbeanspruchungsbeständig sein, da die Schneideinheit sich quer zu dem Tragarm über eine relativ große Breite erstreckt und während des Schneidens von Silofutter der Tragarm stark auf Torsion beansprucht wird. Weiterhin muß der Tragarm über eine möglichst große Länge ein- und ausschiebbar sein um einerseits möglichst weit in dem Silo Silofutter ausschneiden zu können und andererseits die Schneideinheit möglichst weit in den Ladebehälter einziehen zu können. Außerdem muß das Innenprofil auch in der völlig ausgeschobenen Stellung immer noch über eine erhebliche Länge im Außenprofil aufgenommen sein um gegen die während des Schneidens auftretenden Kräftebeständig zu sein. Bis heute ist ein Tragarm, der alle erwähnten unterschiedlichen Anforderungen erfüllt, noch nicht bekannt.

Die Erfindung beabsichtigt einen teleskopischen Tragarm der obenerwähnten Art zu schaffen, der alle obenerwähnten Anforderungen erfüllt.

Dazu wird der erfindungsgemäße teleskopische Tragarm dadurch gekennzeichnet, daß das Außenprofil einen Endteil hat, der mit einem am äußeren Ende offenen Schlitz versehen ist, in dem der Träger beim Einschieben des Innenprofils aufgenommen werden kann.

In dieser Weise wird ein teleskopischer Tragarm erhalten, wobei einerseits in der völlig ausgeschobenen Stellung das Innenprofil immer noch über einen erheblichen Teil durch das Außenprofil umschlossen wird, während andererseits das Innenprofil eingeschoben werden kann bis in den Endteil, dadurch daß der Träger dabei in den Schlitz aufgenommen wird.

Der erfindungsgemäße teleskopische Tragarm ist dadurch sehr gut torsions- und knickbeanspruchungsbeständig und ist überdies über einen großen Abstand ein- und ausschiebbar.

Eine vorteilhafte Unterstützung des Innenprofils wird erreicht wenn gemäß der Erfindung die Querabmessung des Schlitzes kleiner ist als die Querabmessung des Innenprofils.

Vorzugsweise wird dabei der Schlitz in Längerichtung beiderseitig durch Profilteile des Außenprofiles zur Unterstützung des Innenprofils begrenzt.

Gemäß einer sehr vorteilhaften Ausführung der Erfindung haben die Profile einen etwa quadratischen Querschnitt, wobei während Betriebs die Diagonalen der Profile sich etwa waagerecht und senkrecht erstrecken und wobei der Schlitz sich in Querrichtung über einen Teil von zwei benachbarten Seiten des Außenprofils erstreckt.

Die Erfindung wird hiernach anhand der Zeichnung weiter erläutert, in der ein Ausführungsbeispiel des erfindungsgemäßen teleskopischen Tragarmes schematisch dargestellt ist.

Fig. 1 ist eine schematisch dargestellte Seitenansicht eines Silofuttermischdosierwagens, bei dem eine Ausführung des erfindungsgemäßen teleskopischen Tragarmes angewandt ist.

Fig. 2 ist eine teilweise dargestellte Ansicht gemäß dem Pfeil II des teleskopischen Tragarmes aus Fig. 1.

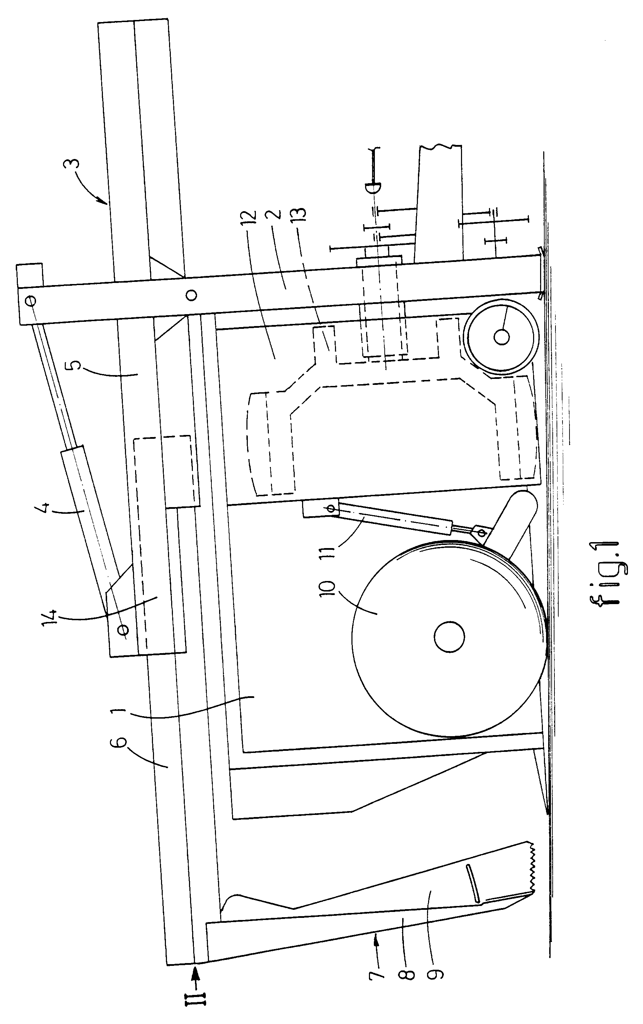

In Fig. 1 ist schematisch eine Seitenansicht eines Silofuttermischdosierwagens dargestellt, der mit einem Ladebehälter 1 mit einem aufstehenden Gestell 2 versehen ist, in dem ein teleskopischer Tragarm 3 schwenkbar unterstützt ist. Der Tragarm 3 ist mittels einer hydraulischen Zylinder-Kolbeneinheit 4 schwenkbar.

Der Tragarm 3 umfaßt ein Außenprofil 5 und ein in diesem Außenprofil 5 verschiebbares Innenprofil 6. Das Innenprofil 6 ist dabei, zum Beispiel mittels einer nicht dargestellten Zylinder-Kolbeneinheit, betätigbar, die in dem Tragarm 3 aufgenommen ist und sich zwischen deren einander gegenüberliegenden Enden erstreckt.

Das Innenprofil 6 tragt am hervorragenden Ende eine Schneideinheit 7, welche ausgebildet ist als Schneidschild 8 mit Seitenschneidschildern 9, von den in Fig. 1 nur eine sichtbar ist. Die Schneidschilder 8, 9 sind am Unterende je mit zwei gegenüber einander hin and her verstellbaren Schneidmessern versehen, von den vorzugsweise ein fest angeordnet ist.

Der Ladebehälter 1 ist mit zwei Rädern 10 versehen, die auf- und abwärts verstellbar sind mittels einer zugehörigen Zylinder-Kolbeneinheit 11. In dem Ladebehälter 1 ist eine Mischkammer 12 angeordnet, in der zwei Mischglieder drehbar unterstützt sind. Der beschriebene Silofuttermischdosierwagen ist weiter beschrieben in der EP-A-0 448 140 der Anmelderin, auf welche Anmeldung hier zur Erläuterung hingewiesen wird.

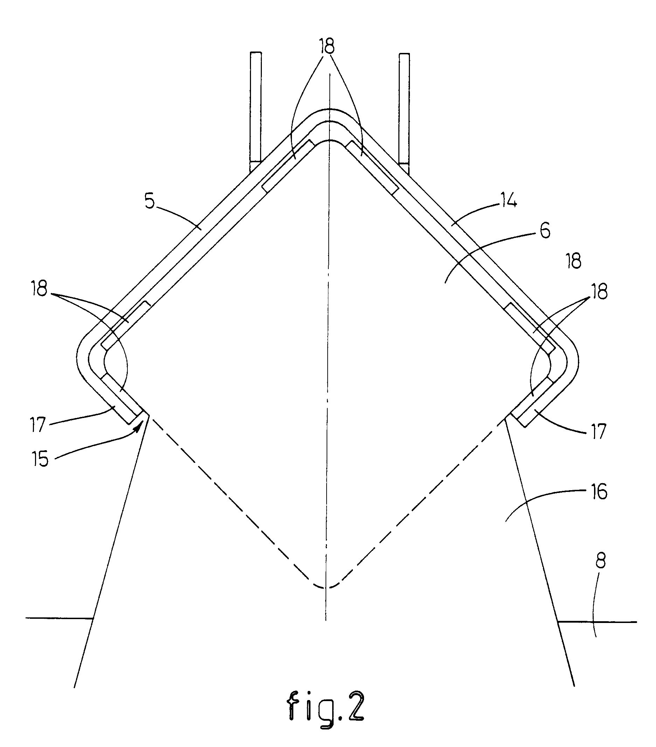

Für ein gutes Funktionieren des beschriebenen Silofuttermischdosierwagens ist es wichtig, daß der Tragarm 3 einerseits möglichst weit ausschiebbar ist, so daß die Schneideinheit 7 möglichst weit in den Silo gebracht werden kann zum Ausschneiden von Silofutter und andererseits möglichst weit eingeschieben werden kann, so daß das ausgeschnittene Silofutter mittels des Schneidschildes 8 an die Mischglieder 13 zugeführt werden kann. Dazu ist das Außenprofil 5 des Tragarmes 3 mit einem Endteil 14 versehen mit einem am einen Ende offenen Schlitz 15, in dem ein Träger 16, mit dem die Schneidschilder 8, 9 am Ende des Innenprofils 6 befestigt sind, beim Einschieben des Innenprofils 6 aufgenommen werden kann, wie insbesondere Fig. 2 zeigt. Die Querabmessung des Schlitzes 15 ist kleiner als die größte Querabmessung des Innenprofiles 6. Dadurch wird der Schlitz 15 beidseitig durch Profilteile 17 begrenzt, die das Innenprofil 6 unterstützen.

Wie Fig. 1 zeigt, wird das Innenprofil 6 auch in der maximal ausgeschobenen Stellung immer noch über einen erheblichen Teil seiner Länge im Außenprofil 5 unterstützt, während anderseids durch das Vorhandensein des Schlitzes 15 das Innenprofil 6 eingeschoben werden kann bis in eine Stellung, in der das Schneidschild 8 an die Mischglieder 13 grenzt. Die beide Profile 5, 6 haben einen etwa quadratischen Querschnitt, so dass der Tragarm 3 eine größe Torsionssteifheit hat. Die Profile 5, 6 sind in der montierten Zustand mit den Diagonalen sich etwa waagerecht und senkrecht erstrekkend angeordnet, wobei der Schlitz 15 sich in Querrichtung über einen Teil von zwei benachbarten Seiten des Außenprofiles 5 erstreckt.

Für eine gute Verschiebbarkeit des Innenprofiles 6 im Außenprofil 5 sind Streifen Führungsmaterial 18 angeordnet, die aus Bronze, Kunststoff oder ein anderes geeignetes Material bestehen können.

Als Alternativ ist es auch möglich die Profile 5, 6 zylindrisch auszubilden, wobei der Schlitz im Außenprofil sich in Querrichtung über eine Bogenlänge von weniger als 180° erstreckt.

Aus dem Obenstehenden wird klar sein, dass die Erfindung einen teleskopischen Tragarm schaft, die gut torsions- und knickbeanspruchungsbeständig ist. Weiterhin kann der Tragarm über eine größe Länge ein- und ausgeschoben werden.

Die Erfindung ist nicht zu den im Obenstehenden beschriebenen Ausführungen beschränkt, die im Rahmen der Ansprüche in verschiedenen Weisen abgeändert werden können.

## Patentansprüche

1. Teleskopischer Tragarm, insbesondere für eine Silofutterschneidvorrichtung mit einem Ladebehälter (1), mit zwei langgestreckten, torsionsfesten Profilen (5,6), wovon ein Innenprofil (6) in einem Außenprofil (5) verschiebbar ist, wobei am einen Ende des Innenprofils ein Träger (16), insbesondere für eine Schneideinheit (7), befestigt ist, **dadurch gekennzeichnet**, daß das Außenprofil (5) einen Endteil hat, der mit einem am äußeren Ende offenen Schlitz (15) versehen ist, in dem der Träger (16) beim Einschieben des Innenprofils (6) aufgenommen werden kann.

2. Teleskopischer Tragarm nach Anspruch 1, **dadurch gekennzeichnet**, daß die Querabmessung des Schlitzes kleiner ist als die Querabmessung des Innenprofils.

3. Teleskopischer Tragarm nach Anspruch 2, **dadurch gekennzeichnet**, daß der Schlitz in Längerichtung beiderseitig durch Profilteile des Außenprofils zur Unterstützung des Innenprofils begrenzt wird.

4. Teleskopischer Tragarm nach einem der vorgehenden Ansprüche, **dadurch gekennzeichnet**, daß die Profile einen etwa quadratischen Querschnitt haben.

5. Teleskopischer Tragarm nach Anspruch 4, **dadurch gekennzeichnet**, daß die Diagonalen der Profile während des Betriebs sich etwa waagerecht und senkrecht erstrecken und daß der Schlitz sich in Querrichtung über einen Teil von zwei benachbarten Seiten des Außenprofils erstreckt.

6. Teleskopischer Tragarm nach einem der Ansprüche 1-3, **dadurch gekennzeichnet**, daß die Profile einen etwa kreisförmigen Querschnitt haben, wobei der Schlitz sich in Querrichtung über eine Bogenlänge von weniger als 180° erstreckt.

7. Teleskopischer Tragarm nach einem der vorgehenden Ansprüche, **dadurch gekennzeichnet**, daß zwischen dem Innen- und Außenprofil Führungsmaterial, zum Beispiel Bronze oder Kunststoff, angeordnet ist.

## Claims

1. A telescopic supporting arm, in particular for a silage-cutting device with a loading container (1), comprising two elongate, torsion-resistant profiled members (5, 6), of which an inner profiled member (6) is displaceable in an outer profiled member (5), wherein a carrier (16), in particular for a cutting unit (7), is fixed to one end of the inner profiled member, characterised in that the outer profiled member (5) has an end part provided with a slot (15) which is open at the outer end and which can receive the carrier (16) when the inner profiled member (6) is inserted.

2. A telescopic supporting arm according to claim 1, characterised in that the transverse dimension of the slot is smaller than the transverse dimension of the inner profiled member.

3. A telescopic supporting arm according to claim 2, characterised in that the slot is bounded on both sides in the longitudinal direction by profiled parts of the outer profiled member in order to support the inner profiled member.

4. A telescopic supporting arm according to any one of the preceding claims, characterised in that the profiled members have a substantially square cross-section.

5. A telescopic supporting arm according to claim 4, characterised in that the diagonals of the profiled members extend substantially horizontally and vertically during operation and in that the slot extends in the transverse direction across part of two adjacent sides of the outer profiled member.

6. A telescopic supporting arm according to any one of claims 1-3, characterised in that the profiled members have a substantially circular cross-section, the slot extending in the transverse direction over an arc length of less than 180°.

7. A telescopic supporting arm according to any one of the preceding claims, characterised in that guide material, for example bronze or plastics, is arranged between the inner and outer profiled members.

## Revendications

1. Bras de support télescopique, en particulier pour un dispositif de coupe de fourrage ensilé comportant un récipient de chargement (1), comportant deux profilés (5, 6) allongés, résistants à la torsion, dont un profilé intérieur (6) peut coulisser dans un profilé extérieur (5), un support (14), en particulier pour une unité de coupe (7), étant fixé à une extrémité du profilé intérieur, caractérisé en ce que le profilé extérieur (5) possède une partie terminale qui est pourvue d'une fente (15) ouverte à l'extrémité extérieure, dans laquelle le support (16) peut être logé lorsqu'on introduit le profilé intérieur (6).

2. Bras de support télescopique selon la revendication 1, caractérisé en ce que les dimensions transversales de la fente sont inférieures aux dimensions transversales du profilé intérieur.

3. Bras de support télescopique selon la revendication 2, caractérisé en ce que la fente est délimitée longitudinalement, des deux côtés, par des parties profilées du profilé extérieur, afin de soutenir le profilé intérieur.

4. Bras de support télescopique selon l'une des revendications précédentes, caractérisé en ce que les profilés ont une section transversale à peu près carrée.

5. Bras de support télescopique selon la revendication 4, caractérisé en ce que les diagonales des profilés s'étendent à peu près horizontalement et verticalement pendant le fonctionnement et en ce que la fente s'étend transversalement sur une partie de deux côtés voisins du profilé extérieur.

6. Bras de support télescopique selon l'une des revendications 1 à 3, caractérisé en ce que les profilés ont une section transversale à peu près circulaire, la fente s'étendant dans la direction transversale sur une longueur d'arc inférieure à 180°.

7. Bras de support télescopique selon l'une des revendications précédentes, caractérisé en ce qu'entre le profilé intérieur et le profilé extérieur il est prévu un matériau de guidage, par exemple du bronze ou une matière plastique.
